# EUROPÄISCHE PATENTSCHRIFT

(11) **EP 1 067 001 B1**
(45) Veröffentlichungstag und Bekanntmachung des Hinweises auf die Patenterteilung: **22.09.2004**
(21) Anmeldenummer: 00114643.0
(22) Anmeldetag: 07.07.2000
(51) Int. Cl.: B60J 7/22

(54) **Windschott für Cabriolet-Fahrzeuge**
Wind deflector for convertible vehicles
Déflecteur de vent pour voiture cabriolet

(30) Priorität: 09.07.1999 DE 29911995 U
(43) Veröffentlichungstag der Anmeldung: 10.01.2001
(73) Patentinhaber: Wilhelm Karmann GmbH, D-49084 Osnabrück (DE)
(72) Erfinder: Van Berkum, Wim, 49179 Ostercappeln (DE)
(74) Vertreter: Busse & Busse Patentanwälte

(56) Entgegenhaltungen:
- EP-A- 0 887 217
- DE-A- 4 405 707
- DE-A- 19 709 602
- DE-C- 4 037 704
- DE-C- 19 725 217

## Beschreibung

Die Erfindung bezieht sich auf ein Windschott für Cabriolet-Fahrzeuge, umfassend eine hinter Vorder- oder Rücksitzen des Fahrzeugs quer zu dessen Fahrtrichtung positionierbare windabweisende Fläche in einer Ausgestaltung gemäß dem Oberbegriff des Anspruchs 1.

Die DE 197 03 654 A1 zeigt ein Windschott, das einen starren Rahmen aufweist, beispielsweise einen Stahlrohrrahmen, in den die windschützende Materialbahn eingepaßt und fest eingebunden ist. Ein derartiges Windschott bildet ein insgesamt starres und sperriges Bauteil aus, das sowohl bei Mitführung im Fahrzeug (Kofferraum) als auch während einer Lagerung außerhalb des Fahrzeugs in jedem Fall bei Nichtgebrauch ein erhebliches Packmaß benötigt. Zudem ist die Einpassung des starren Bauteils in entsprechende Aufnahmen an der Karosserie schwierig und am ehesten mit zwei Personen zu bewältigen.

Aus der EP 0 887 217 A2 ist eine Windschotteinrichtung der eingangs genannten Art bekannt, bei der das Windschott zwei seitlich mit der Karosserie über Schwenklager verbundene Halteelemente aufweist. In ihrer aufrechten Stellung haben diese Halteelemente eine gewölbte und nach oben hin ausgerichtete Längserstreckung, zwischen denen eine flexibel und faltbar ausgebildete windabweisende Fläche wie z.B. ein Kunststoffnetz aufgespannt werden kann. Die seitlichen Halteelemente sind mit der windabweisenden Fläche fest montiert und lassen sich für den Nichtgebrauch zur Fahrzeuglängsmittelebene hin wegverschwenken in einen Windschottaufbewahrungsraum, in dem sie bei Nichtgebrauch verbleiben. Dabei faltet sich die windabweisende Fläche zusammen. Nachteilig hierbei ist, daß der Windschottaufbewahrungsraum den üblichen Verdeckaufbewahrungsraum bzw. auch den Gepäckladeraum verkleinert und das Verdeck und dessen Gestängeteile den Windschottaufnahmeraum für eine Bewegung des Verdeckes in einen Verdeckaufnahmeraum zu überfahren haben. Das wirkt sich nachteilig nicht nur auf die nutzbaren Räume, sondern auch auf die Freizügigkeit der konstruktiven Auslegung der Verdeckbetätigungsteile aus.

Aus der DE 40 37 704 C1 ist ein Cabriolet-Fahrzeug bekannt, bei dem eine windabweisende Fläche in Gestalt eines rolloartigen Windschutzes über Stützbacken an den Innenbereichen der Karosserie und oberseitig über Aufsatzarme an den Stirnkanten von rückwärtigen Seitenscheiben abzustützen ist. Dieser Windschutz ist daher nur nutzbar für Fahrzeuge, die rückwärtige Seitenscheiben haben. Auch diese hinteren Seitenscheiben werden durch die Spannkräfte des Windschutzrollos im aufgespannten Zustand erheblichen Momentenbelastungen ausgesetzt, die die Hebe- und Absenkvorrichtungen der Seitenscheiben belasten.

Aus der DE 44 05 707 A1 ist ein Windschutz für Cabriolet-Fahrzeuge mit einem aufund abbeweglichen, aus einem hinter den Sitzen gelegenen Stauraum verfahrbaren Windschott bekannt. Dieser hat seitliche Aufspannglieder, die aus einem schlauchförmigen aufblasbaren Luftsack bestehen, zwischen denen ein Gitternetz als windabweisende Fläche aufgespannt werden kann. Dazu sind elektrische Antriebe sowie Luftzuleitungen vorgesehen, um das Windschott in seine aufgestellte Position zu überführen und aus diesem wiederum in den Aufbewahrungsraum einfahren zu können. Dies erfordert einen erheblichen Bauaufwand, wobei der Aufbewahrungsraum wiederum den Gepäckladeraum sowie die Verdeckgestängeteile behindern.

Aus der DE 197 25 217 C ist eine Windschutzvorrichtung mit einer aufrollbaren flexiblen Windschutzfläche bekannt, die über fahrzeugfeste Aufrolleinrichtungen aufgerollt werden kann. Dazu ist der karosserieseitig fest vorgesehene schwenkbewegliche Aufspannrahmen vorgesehen, der in eine Aufspannstellung und eine Einfahrstellung verschwenkt werden kann. Die dazu erforderlichen Teile verursachen einen erheblichen Bauaufwand und erfordern zur Betätigung entsprechende Antriebselemente.

Aus der 197 09 602 A ist schließlich ein Windschutz für Cabriolet-Fahrzeuge bekannt, der einen starren Rahmen aufweist, der eine dazwischenliegende windabweisende Fläche umgrenzt. Der starre Rahmen mit der windabweisenden Fläche ist an dem Fahrzeug festzulegen und aus diesem wiederum herauszunehmen. Zur Bevorratung beansprucht dieser Rahmen einen erheblichen Raum und bereitet im übrigen bei der Montage aufgrund von möglichen Verkantungen Probleme.

Es ist Aufgabe der vorliegenden Erfindung, ein Windschott für Cabriolet-Fahrzeuge der eingangs genannten Art zur Verfügung zu stellen, das hinsichtlich seines Handlings und hinsichtlich seines Packmaßes bei Nichtgebrauch zu überzeugen vermag.

Zur Lösung dieser Aufgabe zeichnet sich das Windschott für Cabriolet-Fahrzeuge der eingangs genannten Art dadurch aus, daß die Haltearme starr und in karosserieseitige Halterungen einsteckbar und aus diesen herausnehmbar ausgebildet sind und daß die windabweisende Fläche lösbar an den starren Haltearmen befestigbar ist, so daß die windabweisende Fläche um die seitlichen Haltearme aufgerollt werden kann.

Damit ist ein Windschott geschaffen, das außerhalb der beiden seitlichen einzelnen Haltearme als nicht starres Bauteil zusammenlegbar ist und insofern nur ein geringes Packmaß sowohl bei Mitführung im Auto als auch bei externer Lagerung beansprucht. Das Handling ist dadurch vereinfacht, daß die seitlichen Haltearme nacheinander in karosserieseitige Halterungen eingesteckt werden können, so daß ein Verkanten oder dergleichen wie bei einem insgesamt starren Bauteil ausgeschlossen ist. Da lediglich die seitlichen Haltearme starre Rohrbauteile ausbilden, ist das Gewicht eines solchen Windschotts gleichfalls verringert.

Besonders vorteilhaft sind die spannenden Federelemente innerhalb der Haltearme unsichtbar angeordnet, so daß die Optik und die Sicherheit nicht beeinträchtigt sind.

Besonders vorteilhaft ist über das oder die Federelement(e) in den Haltearmen und ein oben und unten in der windabweisenden Fläche verlaufendes Spannseil insgesamt ein Spannring ausgebildet, in dem die windabweisende Fläche gehalten ist, so daß die Stabilität erhöht ist. Über den gesamten Verlauf des Windschotts kann daher die Spannung zwischen der oberen und unteren Kante der windabweisenden Fläche hoch gehalten werden, wodurch die Windgeräusche vermindert sind.

Weitere Vorteile und Merkmale ergeben sich aus in der Zeichnung dargestellten Ausführungsbeispielen des Gegenstandes der Erfindung.

In der Zeichnung zeigt:
- Fig. 1: eine Ansicht schräg von hinten eines erfindungsgemäßen Windschotts bei Einsatz hinter den Vordersitzen eines Cabriolet-Fahrzeugs,
- Fig. 2: einen Schnitt entlang der Linie II-II in Fig. 1,
- Fig. 3: eine Detailansicht der Halterungselemente für die seitlichen Haltearme des Windschotts,
- Fig. 4: eine ähnliche Ansicht wie Fig. 1 eines alternativen Windschotts,
- Fig. 5: eine ähnliche Ansicht wie Fig. 2 des alternativen, mit einem Federschloß versehenen Windschotts,
- Fig. 6: eine Detailansicht des Federschlosses des Windschotts nach Fig. 4,
- Fig. 7: eine ähnliche Ansicht wie Fig. 3 der Aufnahmeelemente der Alternativversion nach Fig. 4,
- Fig. 8: die Schalenteile der seitlichen Haltearme für das Windschott nach Fig. 4,
- Fig. 9: eine Detailansicht eines seitlichen Nachspannmechanismus für die windabweisende Fläche.

Das Windschott 1,101 ist insgesamt in seitlichen Aufnahmen 2 eines Cabriolet-Fahrzeugs 3 halterbar. Diese Anordnung kann sowohl hinter den rückwärtigen Sitzen als auch, insbesondere bei zweisitzigen Cabriolet-Fahrzeugen, hinter den vorderen Sitzen erfolgen.

Die windabweisende Fläche 5,105 des Windschotts erstreckt sich dabei im wesentlichen über die gesamte Innenraumbreite des Cabriolet-Fahrzeugs 3, so daß die vor dem Windschott 1,101 sitzenden Insassen einen Schutz vor Verwirbelungen erfahren.

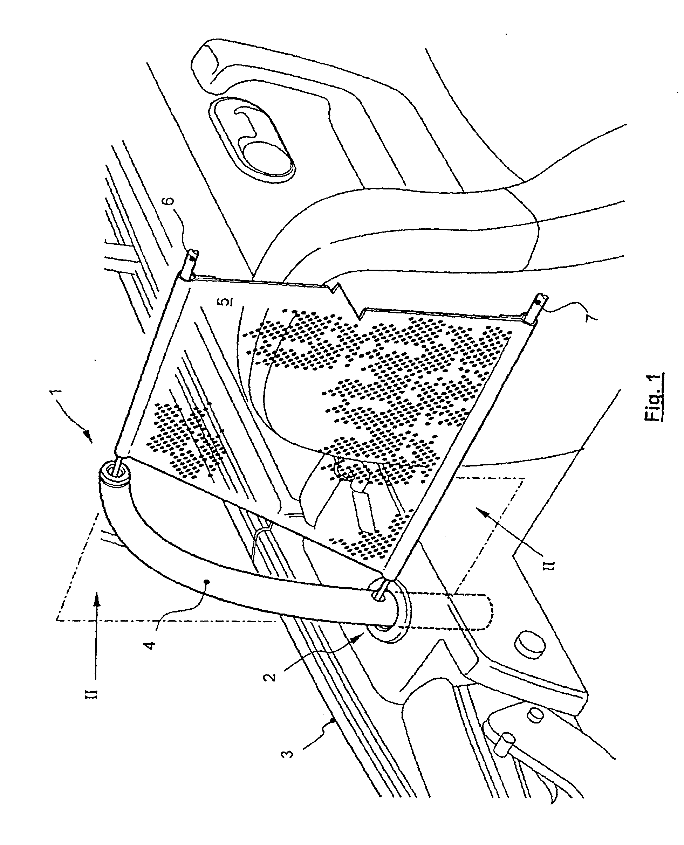

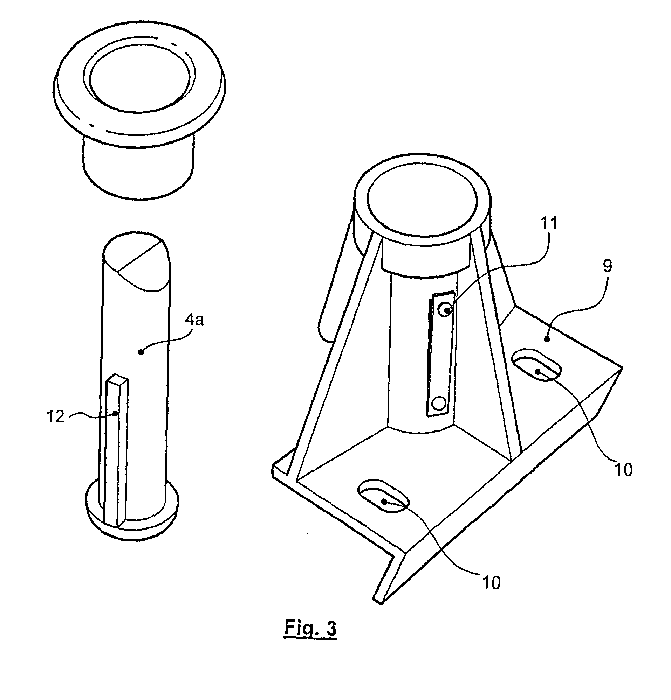

Das erste Ausführungsbeispiel (Fig. 1 bis 3) der Erfindung zeigt ein Windschott 1, das eine Windabweiserfläche 5 aufweist, die ober- und unterseitig zwischen Spannseilen 6 und 7 eingespannt ist. Diese erstrecken sich in Fahrzeugquerrichtung und sind in zwei seitlichen Haltearmen 4, die im wesentlichen vertikal angeordnet sind, gehalten. Die windabweisende Fläche 5 ist gebildet aus beispielsweise einer Stoffbahn oder anderem textilem Material, einem Drahtgewebe, einer durchbrochenen Kunststoffolie o. dgl.

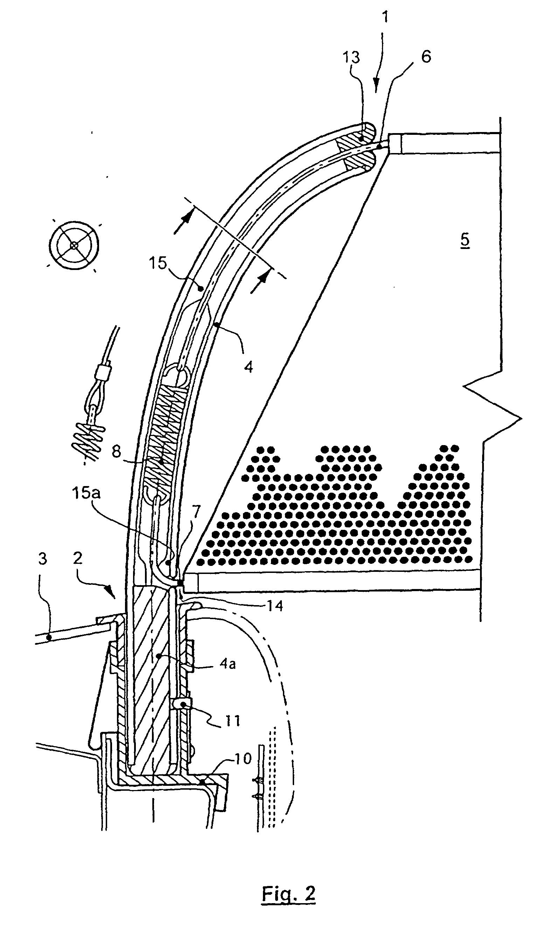

Wie in Fig. 2 zu sehen ist, ist zumindest einer der seitlichen Haltearme 4 mit einem Federelement 8 zur Spannung der Spannseile 6,7 der windabweisenden Fläche 5 versehen. Im Ausführungsbeispiel sind beide seitlichen Haltearme 4 mit einem derartigen Federelement 8 versehen. Das Federelement 8 ist als Schraubenfeder ausgebildet und verbindet das oberseitige Spannseil 6 mit dem unterseitigen Spannseil 7. Insgesamt ist damit ein Spannring gebildet, dadurch werden beide Spannseile 6 und 7 gleichzeitig durch die Feder 8 unter Spannung gehalten. Die Federn 8 sind unsichtbar in die Haltearme 4 integriert. Die Haltearme 4 können von oben in eine Aufnahme 2 der Karosserie 3 eingesteckt werden und sind in dieser Aufnahme 2 verrasterbar. Hierzu ist in der Karosserie 3 ein Aufnahmebereich vorgesehen, in dem ein Aufnahmeelement 9 festgelegt wird, etwa durch Verschrauben mit der Karosserie über Bohrungen 10. Das Aufnahmeelement 9 weist einen Verrastmechanismus, beispielsweise eine federbelastete Einrastnase 11 auf, die in eine entsprechende Durchbrechung des einzusteckenden Haltearms 4 eingreift und diesen daher gegen ein Herausziehen sichert. Auch andere federbelastete Einrastelemente oder ein Splint o. dgl. kommen zur Sicherung in Betracht. Eine Verdrehsicherung des eingesteckten Halterarms 4 ist über eine entsprechende Längsanformung 12 an einem in den Haltearm 4 einzusteckenden Einpreßteil 4 a erreichbar. Der Haltearm 4 ist durch Lösen der federbelasteten Einrastnase 11 jederzeit lösbar, so daß die Montage und Demontage einfach vorgenommen werden können.

In seinem oberen Endbereich ist der rohrförmig ausgebildete Haltearm 4 mit einer zentral gebohrten Endkappe 13 versehen, durch deren Bohrung das obere Spannseil 6 verläuft.

Im unteren Bereich, jedoch oberhalb der Brüstungslinie der Karosserie 3, ist eine in Betriebsstellung dem Innenraum des Fahrzeugs zugewandte seitliche Bohrung 14 im Haltearm 4 angeordnet, durch die hindurch das untere Spannseil 7 des Windschotts 1 geführt ist. Der rohrförmige Haltearm 4 ist zweischalig ausgebildet, wobei die innere Schale 15 als Führungselement für das Spannseil 6 bzw. 7 dient und im Bereich der Umlenkung des Spannseils 7 an der unteren Bohrung 14 eine den Kurvenradius vergrößernde vorspringende Führungsfläche 15 a ausbildet.

Vermittels der inneren Schale 15 können die Spannseile 6,7 außerhalb des Haltearms 4 über die Feder 8 miteinander verbunden werden und dann in das die äußere Schale bildende Rohr eingeschoben werden. Die innere Schale 15 ist zur leichteren Montage der Spannseile 6,7 in ihrem Längsverlauf zweigeteilt. Die Teilungsebene befindet sich in der Ebene, in der die Spannseile 6,7 verlaufen.

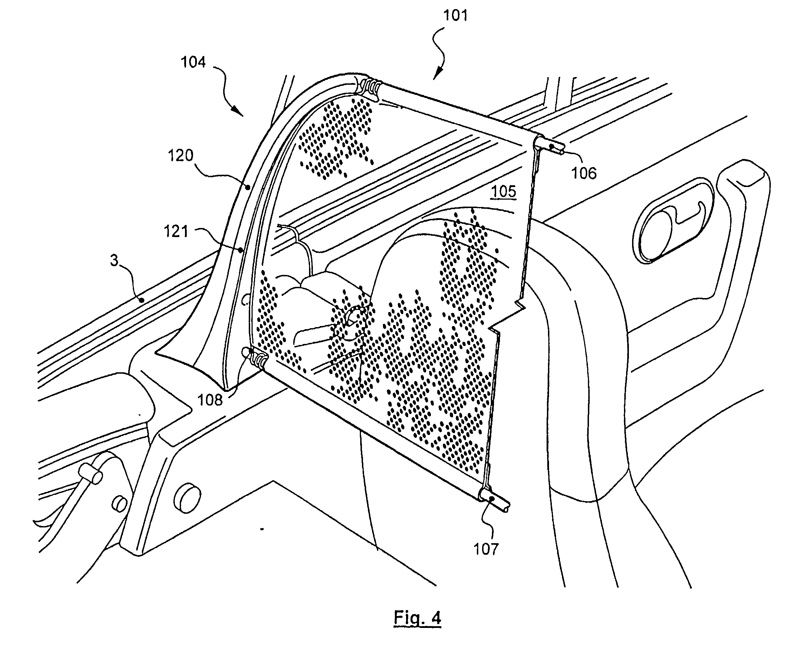

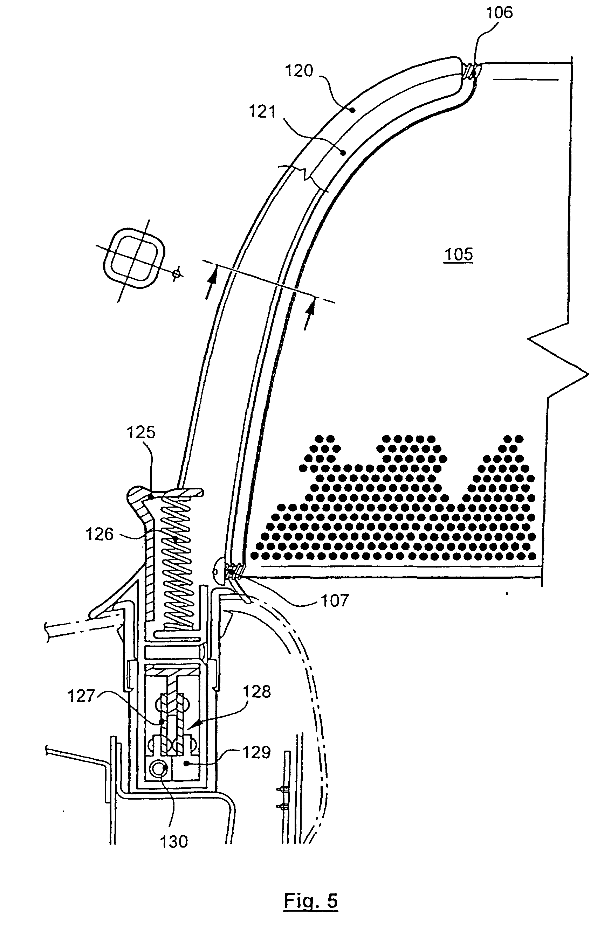

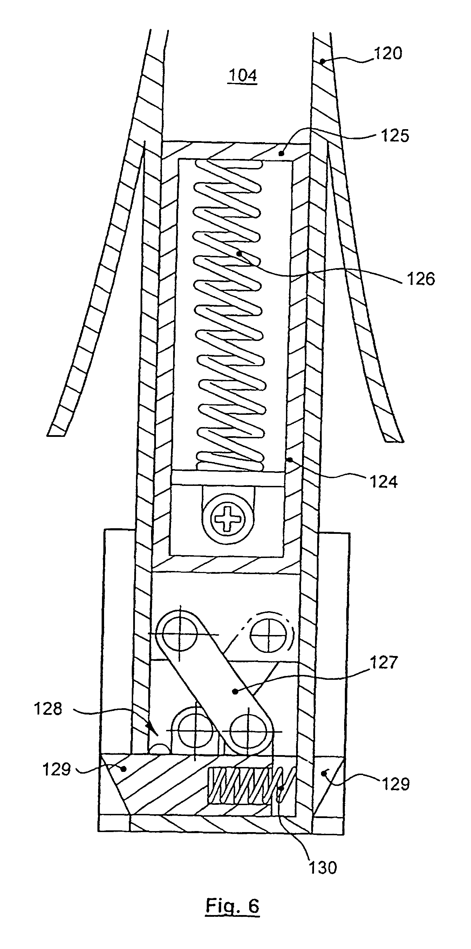

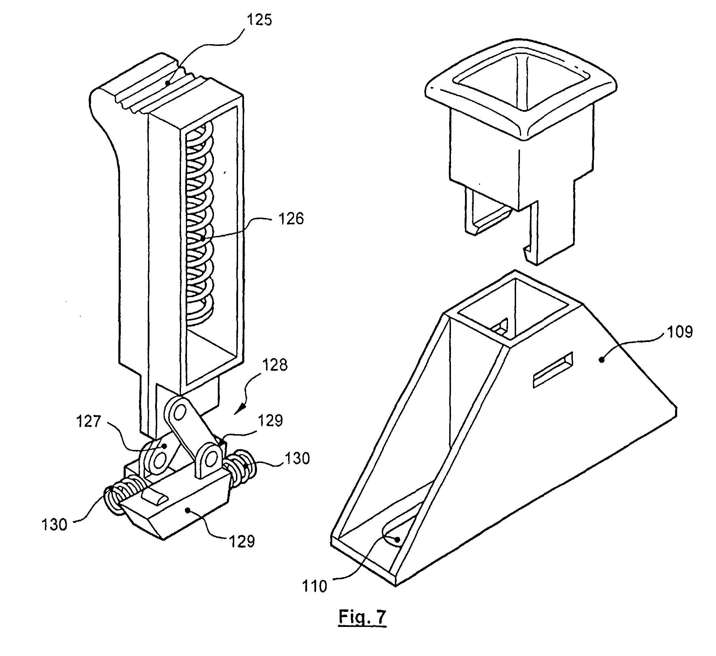

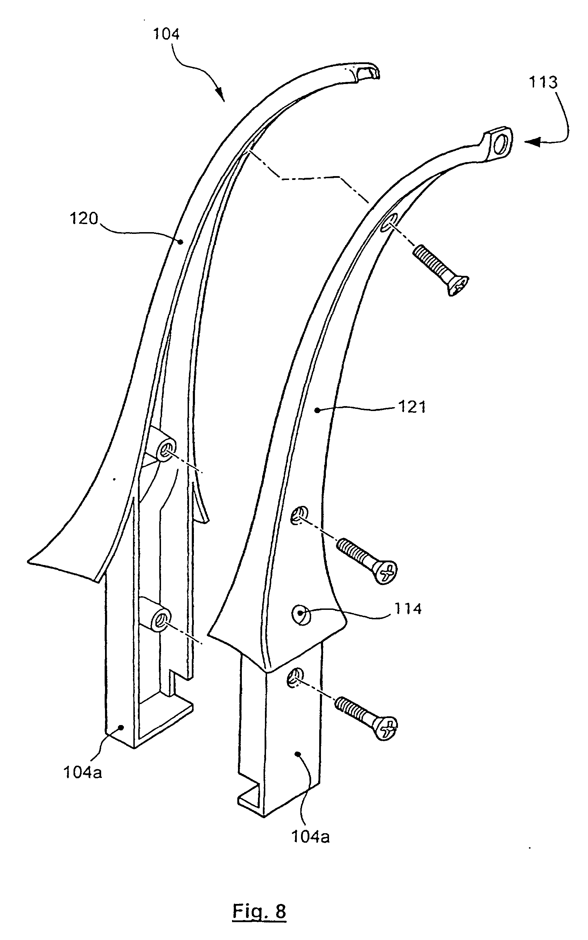

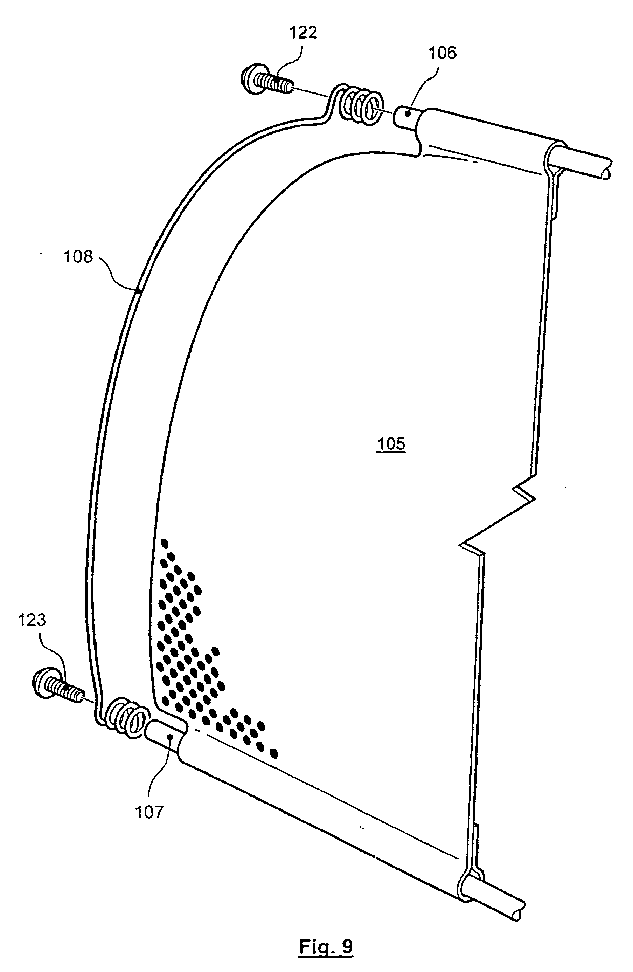

Gemäß einer weiteren Version (Fig. 4 bis 9) umfassen die seitlichen Haltearme 104 des Windschotts 101 jeweils zwei zusammenzusetzende Schalenteile 120,121, die beispielsweise aus Kunststoff gefertigt sein können und ebenfalls zur vertikalen Fahrzeugslängsmittelebene hin gebogen sind. Im oberen Bereich findet sich eine dem inneren Schalenteil 121 zugeordnete Austrittsöffnung 113 für das obere Spannseil 106, im unteren Bereich ist ebenfalls eine seitliche Bohrung 114 für den Durchtritt des unteren Spannseils 107 vorgesehen. Das Spannseil ist in dieser Version nicht durchgehend und ringförmig ausgebildet, sondern, wie insbesondere in den Fig. 5 und 9 zu erkennen ist, in zwei separate Spannseile 106,107 getrennt, die jeweils einzeln (Fig. 9) gegenüber den seitlichen Haltearmen 104 verspannt werden. Hierzu sind die Spannseile in ihren seitlichen Endbereichen beispielsweise mit einem Innengewinde versehen, in das Schrauben 122 und 123 eingreifen können, die durch die dem Fahrzeuginnenraum zugewandte Schale 121 des Haltearms 104 geführt sind. Ferner ist ein Federelement 108 vorgesehen, das Spiralfederbereiche unterhalb der Schraubenköpfe der Schrauben 122 und 123 aufweist und einen das obere 106 mit dem unteren Spannseil 107 im Randbereich der windabweisenden Fläche 105 verbindenden Bügel aufweist. Bei Festziehen der Schrauben werden die Spannseile 106 und 107 gedehnt. Über die Feder 108, die mit den Querseiten der windabweisenden Fläche 105 verbunden ist, wird dadurch gleichzeitig neben der vertikalen Spannung auch eine horizontale Spannung in diese Fläche eingetragen.

Der Einsteckfuß 104 a des Haltearms 104 bildet einen vieleckigen, beispielsweise quadratischen Grundriß aus, so daß eine Verdrehsicherung ohne weiteres bewirkt ist. Dieser ist in einer über Bohrungen 110 an der Karosserie 3 verschraubten oder mit dieser verschweißten Aufnahmeeinheit 109 halterbar.

Hierfür ist in den Einsteckfuß 104 a ein Federschloß 124 einsetzbar, das in seinem oberen Teil eine Betätigungstaste 125 aufweist, die in entspannter Stellung einer vertikal wirkenden Feder 126 sich in oberer Endposition befindet. In dieser Stellung ist eine federbelastete Schloßfalle 128 durch seitliche, über Federn 130 bewirkte Ausschiebung von Riegeln 129 in verriegelndem Eingriff mit der Aufnahmeeinheit 109. Durch die Federn 130 erfolgt der Eingriff bei Einsatz der Haltearme 104 automatisch.

Zur Entriegelung wird die Betätigungstaste 125 niedergedrückt, wodurch zwei diese mit den Riegeln 129 verbindende Schwenkhebel 127 gegen die Kraft der Federn 130 auf die Riegel 128 einwirken und diese daher außer Eingriff bewegen.

Bei dieser Version ist die Montage insofern einfacher, als kein geschlossener Spannseilring ausgebildet werden muß und der obere und das untere Spannseil 106 bzw. 107 einzeln montiert werden können.

In beiden Versionen ist bei ausgezogenen Haltearmen 4 bzw. 104 die jeweilige Aufnahmeöffnung durch eine entsprechende Abdeckkappe verschließbar.

Ebenfalls ist es beiden Versionen gemein, daß zur Erreichung eines geringen Packmaßes die windabweisende Fläche 5 bzw. 105 um die seitlichen Haltearme 4 bzw. 104 aufgerollt werden kann, so daß ein geringer Packraum ausreicht, um das Windschott zu halten, beispielsweise der Kasten des Reserverads, das Handschuhfach oder ein Bereich hinter einer Seitenverkleidung im Kofferraum.

Es sind andere als die vorgestellten Halterungsmöglichkeiten für den Fuß eines Haltearms 4 oder 104 möglich. In jedem Fall muß eine zuverlässige und lösbare Verriegelung erreicht werden, unter denen sich der Fachmann die geeignete aussuchen wird.

Mit der Erfindung ist Gewicht eingespart durch den Verzicht auf einen festen Rahmen. Bei Anpassung einer jeweiligen Aufnahmeeinheit 9,109 an einen bestimmten Fahrzeugtyp erübrigt sich eine weitere Anpassung der Haltearme 4, 104, so daß diese prinzipiell bei verschiedensten Fahrzeugen zur Anwendung kommen können und jeweils nur die Aufnahmeeinheiten an dieses Fahrzeug und den jeweils seitlichen Karosseriebereich angepaßt werden müssen. Eventuell ist eine Anpassung der Breite der windabweisenden Fläche 5 bzw. 105 angezeigt.

Durch die Verwendbarkeit für viele Fahrzeugtypen ergibt sich eine Kostensenkung in der Herstellung, da eine große Anzahl von Windschotts eines Typs produziert werden kann.

## Patentansprüche

1. Windschott (1; 101) für Cabriolet-Fahrzeuge, umfassend eine hinter Vorder- oder Rücksitzen des Fahrzeugs quer zu dessen Fahrtrichtung positionierbare windabweisende Flächen (5;105) aus einem flexiblen und faltbaren Material, z.B. einer Stoffbahn oder einem Kunststoffgewebe, und umfassend eine am Cabriolet-Fahrzeug montierbare Haltevorrichtung zum Halten der windabweisenden Fläche in ihrer wirksamen Stellung, wobei die Haltevorrichtung zwei jeweils links und rechts der Fahrzeugbrüstung zugeordnete Haltearme (4;104) umfaßt, **dadurch gekennzeichnet, daß** die Haltearme (4;104) starr und in karosserieseitige Halterungen einsteckbar und aus diesen herausnehmbar ausgebildet sind und die windabweisende Fläche (5;105) lösbar an den starren Haltearmen (4;104) befestigbar ist, so daß zur Erreichung eines geringen Packmaßes die windabweisende Fläche (5;105) um die seitlichen Haltearme (4;104) aufgerollt werden kann.

2. Windschott nach Anspruch 1, **dadurch gekennzeichnet, daß** zumindest einer der Haltearme (4;104) mit einem Federelement (8;108) zur Spannung der windabweisenden Fläche (5;105) versehen ist.

3. Windschott nach Anspruch 2, **dadurch gekennzeichnet, daß** jedem der beiden Haltearme (4;104) ein Federelement (8;108) zugeordnet ist.

4. Windschott nach einem der Ansprüche 2 oder 3, **dadurch gekennzeichnet, daß** das oder die Federelement(e) (8;108) innerhalb des oder innerhalb der Haltearm(e) (4;104) angeordnet ist bzw. sind.

5. Windschott nach einem der Ansprüche 2 bis 4, **dadurch gekennzeichnet, daß** die windabweisende Fläche (5) ober- und unterseitig mit einem Spannseil (6,7) versehen ist, das mit dem bzw. den Federelement(en) (8) einen geschlossenen Ring ausbildet, in welchem die Federspannung horizontal quer zur Fahrtrichtung wirksam ist.

6. Windschott nach einem der Ansprüche 2 bis 4, **dadurch gekennzeichnet, daß** sich das Federelement (108) im wesentlichen parallel zum Haltearm (104) erstreckt und an einer Befestigung eines oberen Spannseils (106) und an einer Befestigung eines unteren Spannseils (107) für die windabweisende Fläche (105) wirksam ist.

## Claims

1. Wind deflector (1; 101) for convertible vehicles, comprising a wind-deflecting surface (5; 105) made of a flexible and foldable material, e.g. a length of cloth or a synthetic textile, which is able to be positioned behind the front or rear seats of the vehicle transversely to the latter's direction of travel, and comprising a supporting arrangement able to be fitted to the convertible vehicle, for holding the wind-deflecting surface in its operative position, the supporting arrangement comprising two supporting arms (4; 104) assigned to points to the right and left respectively of the window-sills of the vehicle, **characterised in that** the mounting arms (4; 104) are rigid and are designed to be insertable in mountings at the bodywork and to be withdrawable therefrom, and the wind-deflecting surface (5; 105) can be detachably fastened to the rigid supporting arms (4; 104), thus enabling the wind-deflecting surface (5; 105) to be rolled up round the lateral supporting arms (4; 104) to allow it to be packed to a small size.

2. Wind deflector according to claim 1, **characterised in that** at least one of the supporting arms (4; 104) is provided with a spring member (8; 108) for tensioning the wind-deflecting surface (5; 105).

3. Wind deflector according to claim 2, **characterised in that** a spring member (8; 108) is assigned to each of the two supporting arms (4; 104).

4. Wind deflector according to either of claims 2 and 3, **characterised in that** the spring member or members (8; 108) is/are arranged inside the supporting arm or arms (4; 104).

5. Wind deflector according to one of claims 2 to 4, **characterised in that** the wind-deflecting surface (5) is provided at the top and bottom with a tensioning cable (6, 7) which, with the spring member or members (8), forms a closed ring in which the spring-exerted tension is operative horizontally, transversely to the direction of travel.

6. Wind deflector according to one of claims 2 to 4, **characterised in that** the spring member (108) extends substantially parallel to the supporting arm (104) and is operative at a fastening for an upper tensioning cable (106) for the wind-deflecting surface (105) and at a fastening for a lower tensioning cable (107) for said surface (105).

## Revendications

1. Déflecteur de vent (1 ; 101) pour véhicules cabriolets, comprenant une surface (5 ; 105) repoussant le vent pouvant être positionnée derrière les sièges avants ou arrières du véhicule transversalement à sa direction de déplacement, surfaces composées en un matériau souple et repliable, par exemple en tissu ou tissu synthétique, et comprenant un dispositif de maintien pouvant être monté sur le véhicule cabriolet pour maintenir la surface repoussant le vent dans sa position utile,
dans lequel le dispositif de maintien comprend deux bras de maintien (4 ; 104) disposés respectivement à droite et à gauche de l'appui du véhicule,
**caractérisé en ce que**
les bras de maintien (4 ; 104) sont rigides et peuvent être introduits dans les supports du côté de la carrosserie et être retirés de ceux-ci et la surface repoussant le vent (5 ; 105) est fixée de manière amovible sur les bras de maintien rigides (4 ; 104) de telle sorte que, pour obtenir un faible encombrement, la surface repoussant le vent (5 ; 105) puisse être enroulée autour des bras de maintien latéraux (4 ; 104).

2. Déflecteur de vent selon la revendication 1,
**caractérisé en ce que**
au moins un des bras de maintien (4 ; 104) est prévu avec un élément ressort (8 ; 108) pour tendre la surface repoussant le vent (5 ; 105).

3. Déflecteur de vent selon la revendication 2,
**caractérisé en ce que**
chacun des deux bras de maintien (4 ; 104) est associé à un élément de ressort (8 ; 108).

4. Déflecteur de vent selon l'une des revendications 2 ou 3,
**caractérisé en ce que**
le ou les élément(s) de ressort (8 ; 108) est/sont disposé(s) à l'intérieur du ou des bras de maintien (4 ; 104).

5. Déflecteur de vent selon l'une des revendications 2 à 4,
**caractérisé en ce que**
du côté supérieur et inférieur de la surface repoussant le vent (5) est prévu un câble tendeur (6, 7) qui forme un anneau fermé avec les élément(s) de ressort (8) dans lequel la contrainte élastique est appliquée horizontalement, transversalement à la direction de déplacement.

6. Déflecteur de vent selon l'une des revendications 2 à 4,
**caractérisé en ce que**
l'élément de ressort (108) est essentiellement parallèle au bras de maintien (104) et est appliqué sur une fixation d'un câble tendeur supérieur (106) et sur une fixation d'un câble tendeur inférieur (107) de la surface repoussant le vent (105).
